# EUROPÄISCHE PATENTSCHRIFT

(11) **EP 1 577 648 B1**
(45) Veröffentlichungstag und Bekanntmachung des Hinweises auf die Patenterteilung: **09.08.2006**
(21) Anmeldenummer: 04006043.6
(22) Anmeldetag: 15.03.2004
(51) Int. Cl.: G01D 11/24

(54) **Messeinrichtung**
Measuring device
Dispositif de mesure

(43) Veröffentlichungstag der Anmeldung: 21.09.2005
(73) Patentinhaber: Siemens Schweiz AG, 8047 Zürich (CH)
(72) Erfinder: Kayser, Ralph, 6004 Luzern (CH)
(74) Vertreter: Weise, Wolfgang

(56) Entgegenhaltungen:
- EP-A- 0 601 507
- DE-A- 10 146 156
- US-A- 5 892 149
- US-B1- 6 365 424

## Beschreibung

Die Erfindung bezieht sich auf eine Messeinrichtung der im Oberbegriff des Anspruchs 1 genannten Art.

Solche Messeinrichtungen werden vorteilhaft in der Heizungs-, Lüftungs- und Klimatechnik (HLK) für Gebäude zur Erfassung einer Prozessgrösse eingesetzt. Eine derartige Messeinrichtung ist beispielhaft eine Einrichtung zur Erfassung der Luftfeuchtigkeit in einem Raum oder in einer Einrichtung zum Zu- oder Abführen von Luft.

Derartige Messeinrichtungen sind auch zur Erfassung der Beleuchtungsstärke oder zur Gasdetektion nutzbar.

Die vorliegende Erfindung ist grundsätzlich einsetzbar, wenn Prozessgrössen mit Sensorelementen erfasst werden, die elektrische Anschlussdrähte aufweisen. Eine derartige Messeinrichtung ist also auch in einem Fahrzeug einsetzbar.

Eine bekannte Messeinrichtung zur Erfassung der Luftfeuchtigkeit weist einen kapazitiven Feuchtesensor und einen Temperatursensor auf. Zur Erfassung von elektrischen Messsignalen sind Anschlussdrähte der beiden Sensoren über Steck- oder Lötverbindungen mit einer elektronischen Schaltung oder mit einem Anschlusskabel verbunden.

Der Erfindung liegt die Aufgabe zu Grunde, eine Messeinrichtung mit elektrischen Sensoren zu schaffen, in der auch unisolierte dünne Anschlussdrähte eines Sensors - beispielsweise solche mit einem Drahtdurchmesser in der Grössenordnung von 0,1 mm - reproduzierbar, sicher und kostengünstig mit einer Leiterplatte verbindbar sind.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

### Es zeigen:

Fig. 1 eine Explosionsdarstellung einer Messeinrichtung mit einem Sensormodul,
Fig. 2 das Sensormodul mit Teilen eines Führungsmittels für Anschlüsse von Sensorelementen,
Fig. 3 ein Ausschnitt einer geschnittenen Darstellung des Sensormoduls,
Fig. 4 eine Prinzipdarstellung zur Wirkungsweise des Führungsmittels,
Fig. 5a eine Ansicht des Führungsmittels im Zustand der Montage,
Fig. 5b eine weitere Ansicht des Führungsmittels im montierten Zustand,
Fig. 6 ein Blockschaltbild der Messeinrichtung in einer Ausführung zur Erfassung der relativen Luftfeuchtigkeit.

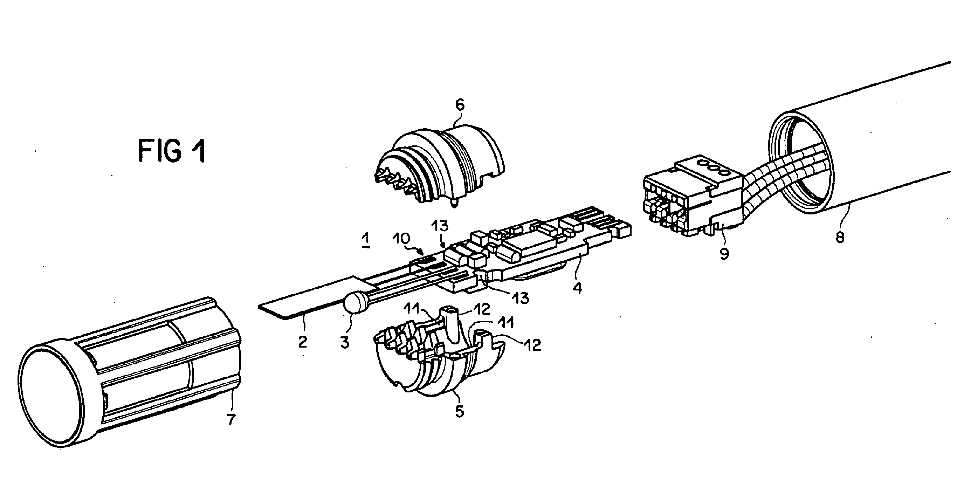

In der Fig. 1 bezeichnet 1 ein Sensormodul mit einem ersten Sensorelement 2 und einem zweiten Sensorelement 3, mit einer ein- oder mehrlagigen Leiterplatte 4, mit einer ersten Schale 5 und einer zweiten Schale 6.

Beispielhaft ist das erste Sensorelement 2 ein Feuchtesensor und das zweite Sensorelement 3 ein Temperatursensor. Mit den beiden Sensorelementen 2 und 3 ist beispielsweise die relative Feuchte eines Raumes oder eines Luftkanals erfassbar.

Für die vorliegende Erfindung ist es grundsätzlich nicht relevant, ob das Sensormodul 1 mehrere Sensorelemente oder lediglich ein einziges Sensorelement aufweist.

Die beiden Schalen 5 und 6 sind derart ausgebildet, dass sie zusammengefügt eine Halterungsfunktion für das Sensormodul 1 ausüben.

Bei Bedarf werden die Sensorelemente 2 und 3 durch eine Abdeckung oder durch ein Filter 7 geschützt, welche vorteilhafterweise über die beiden Schalen 5 und 6 am Sensormodul 1 befestigt werden.

Insbesondere für den Einsatz in einem Kanalfühler ist die Leiterplatte 4 mit einem Fühlerrohr 8 abdeckbar, das vorteilhafterweise über die beiden Schalen 5 und 6 am Sensormodul 1 befestigt wird.

Die Leiterplatte 4 ist beispielsweise über ein mit einem Stecker 9 versehenen Kabel mit einem übergeordneten System, typischerweise mit einem Regel- oder Steuergerät verbunden. In einer Variante ist auf der Leiterplatte 4 eine Kommunikationseinrichtung zur drahtlosen Datenübertragung zwischen dem Sensormodul und dem übergeordneten System angeordnet.

Durch ihre Ausgestaltung dienen die beiden Schalen 5 und 6 in vorteilhafter Art und Weise bei der Montage des Sensormoduls 1 als Produktionswerkzeug. Mit Vorteil werden Formen der Leiterplatte 4 und der ersten Schale 5 so aufeinander abgestimmt, dass die Leiterplatte 4 wenigstens in einem Bereich 10, in dem die Sensorelemente 2 und 3 mit der Leiterplatte 4 zu kontaktieren sind, in der ersten Schale 5 gelagert wird. Ausserdem weisen die Schalen 5 und 6 und die Leiterplatte 4 aufeinander abgestimmte konstruktive Mittel auf, durch welche die Leitplatte 4 im montierten Zustand in den beiden Schalen 5 und 6 festgehalten ist.

Zur Lagerung der Leiterplatte 4 weist die erste Schale 5 beispielhaft sich gegenüberliegende Absätze 11 auf, durch die die Positionierung der Leiterplatte 4 auf der ersten Schale 5 bestimmt wird. Zudem weist die erste Schale 5 beispielhaft Nocken 12 auf, welche in Verbindung mit an der Leiterplatte 4 ausgebildeten Ausnehmungen 13 die Leiterplatte 4 im montierten Zustand in den Schalen 4 und 5 festhalten.

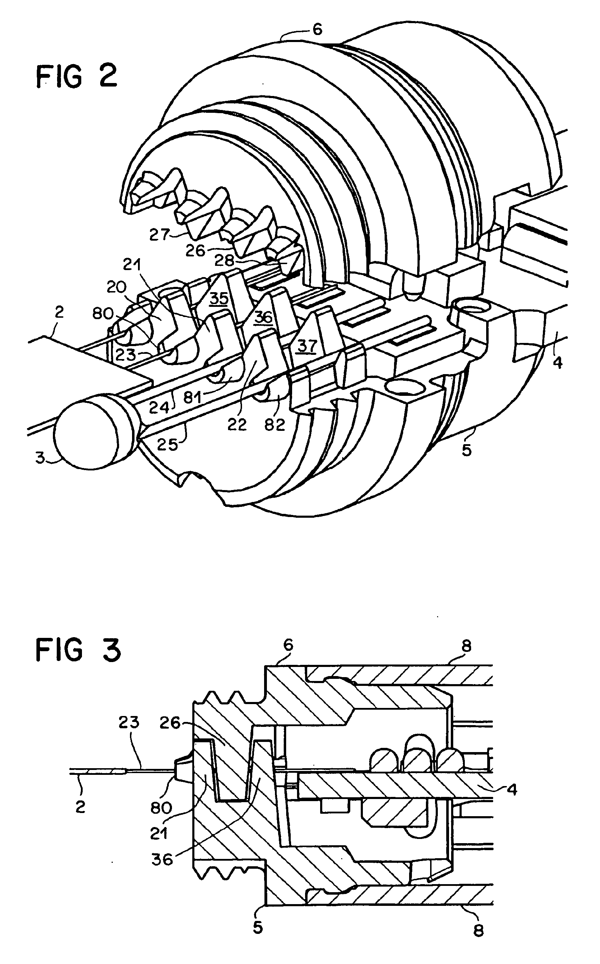

In der Fig. 2 ist die Leiterplatte 4 in der als Produktionswerkzeug einsetzbaren ersten Schale 5 gelagert, wobei die zweite Schale 6 in abgehobenem Zustand dargestellt ist.

Ein erster Zahn 20, ein zweiter Zahn 21 und ein dritter Zahn 22 gehören zu einer ersten gegen die Sensorelemente 2 und 3 hin angeordneten Zahnreihe, welche vorteilhafterweise in der ersten Schale 5 ausgeformt ist und durch welche elektrische Anschlussdrähte 23, 24 und 25 der Sensorelemente 2 und 3 in einem gewissen Abstand voneinander isoliert zur Leiterplatte 4 geführt werden.

Mit Vorteil werden die elektrischen Anschlussdrähte 23, 24 und 25 direkt mit der Leiterplatte 4 verlötet.

In der Fig. 3 ist der zweite Zahn 21 in einem Schnitt dargestellt. Mit 26 ist ein vierter Zahn bezeichnet, der zu einer zweiten Zahnreihe gehört, welche gegenüber der ersten Zahnreihe gegen die Leiterplatte hin versetzt in der zweiten Schale 6 ausgeformt ist.

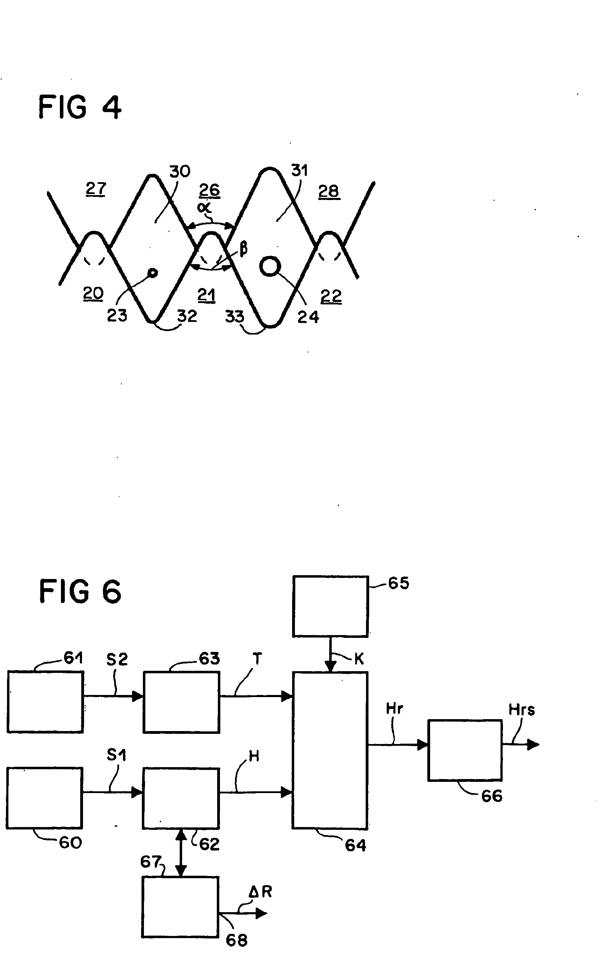

Zum besseren Verständnis des durch die beiden Schalen 5 und 6 ermöglichten Montageverfahrens ist die in der ersten Schale 5 ausgebildete erste Zahnreihe und die in der zweiten Schale 6 ausgebildete zweite Zahnreihe auszugsweise und vereinfacht in der Fig. 4 dargestellt, wobei die beiden Schalen 5 und 6 noch nicht vollständig zusammengefügt sind, und die Ansicht von den Sensorelementen 2 und 3 her dargestellt ist. Neben dem vierten Zahn 26 weist die zweite Zahnreihe einen fünften Zahn 27 und einen sechsten Zahn 28 auf.

Die in der ersten Schale 5 ausgebildete Zahnreihe mit den Zähnen 20, 21 und 22 und die in der zweiten Schale 6 ausgebildete Zahnreihe mit den Zähnen 26, 27 und 28, welche entgegengesetzt den Zähnen 20, 21 und 22 der erste Zahnreihe gerichtet sind, bilden ein zwischen der Leiterplatte 4 und den Sensorelementen 2 und 3 angeordnetes Führungsmittel, durch welches die elektrischen Anschlussdrähte 23, 24 und 25 in einem gewissen Abstand voneinander isoliert zur Leiterplatte 4 geführt werden.

Das Führungsmittel ist in der genauen Formgebung und Auslegung in weiten Grenzen an sich stellenden Anforderungen anpassbar; so beispielsweise an Anzahl und Masse der eingesetzten Sensorelemente, an Form und Drahtdurchmesser der Anschlussdrähte, an eine geforderte Qualität der Abdichtung rund um die Anschlussdrähte und an eine geforderte Kriechstrom- oder auch Spannungsfestigkeit zwischen einzelnen Anschlussdrähten.

Typischerweise sind die beiden Schalen 5 und 6 aus einem Kunststoff gefertigt, wobei insbesondere gewisse Thermoplaste vorteilhaft sind, die kaum Feuchtigkeit aufnehmen.

Bei Bedarf sind zwischen dem montierten Führungsmittel und den Anschlussdrähten existierende Hohlräume durch ein Giessharz abgedichtet, das vorteilhafterweise von der Leiterplatte 4 her eingebracht wird.

In einer vorteilhaften Ausführung sind die Zähne 20, 21, 22, 26, 27 und 28 im wesentlichen keilförmig ausgebildet. Die beiden Zahnreihen sind derart ausgebildet und angeordnet, dass ein erster einem ersten Anschlussdraht 23 zugeordneter Kanal 30 von zwei benachbarten Zähnen 20 und 21 der ersten Zahnreihe und von zwei benachbarten Zähnen 27 und 26 der zweiten Zahnreihe begrenzt wird. Ein zweiter einem zweiten Anschlussdraht 24 zugeordneter Kanal 31 wird von zwei weiteren benachbarten Zähnen 21 und 22 der ersten Zahnreihe und von zwei weiteren benachbarten Zähnen 26 und 28 der zweiten Zahnreihe begrenzt.

Bei einem Zusammenfügen der beiden Schalen 5 und 6 verkleinern sich der Querschnitt des ersten Kanals 30 und auch der Querschnitt des zweiten Kanals 31 immer mehr, wobei der im ersten Kanal 30 eingelegte Anschlussdraht eingefangen und in einem zwischen dem ersten Zahn 20 und dem zweiten Zahn 21 ausgebildeten Sattel 32 positioniert wird und wobei auch der im zweiten Kanal 31 eingelegte Anschlussdraht eingefangen und in einem zwischen dem zweiten Zahn 21 und dem dritten Zahn 22 ausgebildeten weiteren Sattel 33 positioniert wird.

Eine von einem Keilwinkel α der Zähne der zweiten Zahnreihe oder von einem Keilwinkel β der Zähne der ersten Zahnreihe abhängige Steilheit der Zahnflanken wird mindestens so steil gewählt, dass beim Einfangen der Anschlussdrähte 23 und 24 keine Selbsthemmung auftritt. Der zwischen benachbarten Zähnen einer Zahnreihe ausgeformte Sattel 32 oder 33 ist vorteilhafterweise derart auf die Form und den Durchmesser des aufgenommenen Anschlussdrahtes 23 bzw. 24 abgestimmt, dass ein gewisser Grad der Abdichtung, zwischen dem Sensorelement 2 oder 3 und der Leiterplatte im montierten Zustand der beiden zusammengefügten Schalen 5 und 6 erreicht wird.

Bei Bedarf weist das Führungsmittel eine dritte Zahnreihe auf, welche zwischen der zweiten Zahnreihe und der Leiterplatte 4 angeordnet und an der ersten Schale 5 ausgebildet ist. Mit Vorteil weist die dritte Zahnreihe einen siebten Zahn 35 (Fig. 2), einen achten Zahn 36 und einen neunten Zahn 37 auf, wobei der Anschlussdraht 23 des ersten Sensorelements 2 zwischen dem siebten Zahn 35 und dem achten Zahn 36 liegt und der Anschlussdraht 24 des zweiten Sensorelements 3 zwischen dem achten Zahn 36 und dem neunten Zahn 37 liegt. Mit Vorteil sind die Zähne 35, 36 und 37 der dritten Zahnreihe von den Sensorelementen 2 und 3 aus gesehen genau hinter den entsprechenden Zähnen 20, 21 und 22 der ersten Zahnreihe angeordnet und die zweite Zahnreihe ist im zusammengefügten Zustand der beiden Schalen 5 und 6 zwischen der ersten und der dritten Zahnreihe eingefügt.

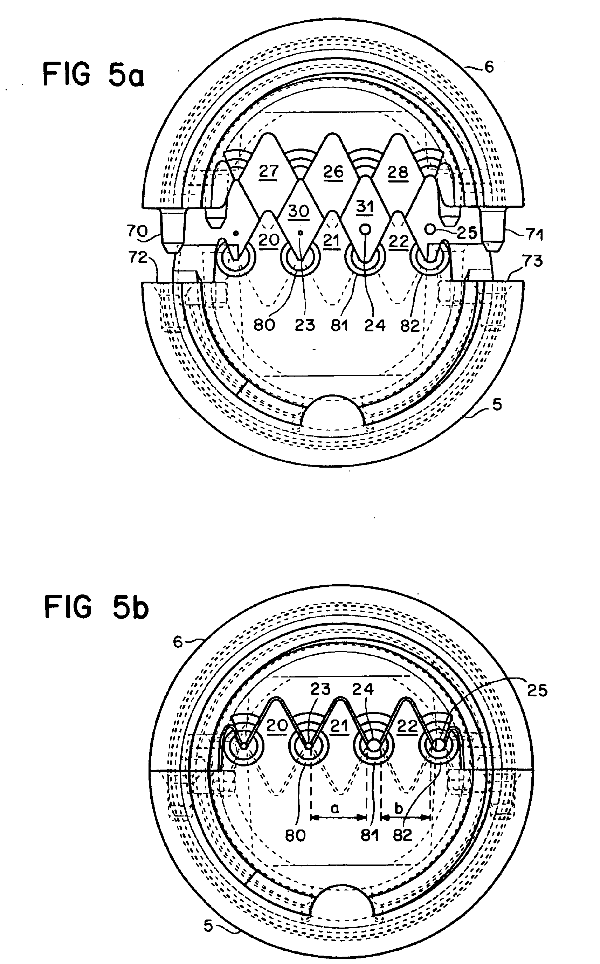

In Fig. 5a und Fig. 5b sind die beiden Schalen 5 und 6 in einer Ansicht von den Sensorelementen 2 und 3 her dargestellt, wobei die beiden Schalen 5 und 6 in der Fig. 5a noch nicht und in der Fig. 5b vollständig zusammengefügt sind.

In der Fig. 5a ist die gegenüber der ersten Zahnreihe nach hinten verschobene zweite Zahnreihe mit teilweise gestrichelt - also unsichtbar markiert - gezeichneten Zahnspitzen der Zähne 27, 26 und 28. Mit Vorteil ist ein Zahn 27 oder 26 oder 28 genau hinter einem entsprechenden Zahn 20 oder 21 oder 22 angeordnet, wobei die Zahnspitzen der ersten Zahnreihe entgegengesetzt zu den Zahnspitzen der zweiten Zahnreihe gerichtet sind.

Vorteilhafterweise verfügen die beiden Schalen 5 und 6 über Positionierungsmittel, durch welche die beiden Schalen 5 und 6 beim Zusammenfügen gegeneinander genau ausrichtbar sind. Zur genauen Positionierung weist die zweite Schale 6 beispielhaft Nocken 70 und 71 auf, die bei Zusammenfügen der beiden Schalen 5 und 6 in entsprechende an der ersten Schale 5 ausgenommene Löcher 72 und 73 eingeführt werden.

In der Fig. 5b bezeichnet a den Abstand zwischen den zwei nebeneinanderliegenden Anschlussdrähten 23 und 24 und b den Abstand zwischen den zwei nebeneinanderliegenden Anschlussdrähten 24 und 25.

Sofern der Abstand a bzw. b zwischen zwei Anschlussdrähten so klein ist, dass sich an der Oberfläche der beiden Schalen 5 und 6 unzulässig hohe Kriechströme zwischen den Anschlussdrähten 23 und 24 bzw. 24 und 25 ausbilden könnten, wird vorteilhafterweise an den beiden Schalen 5 und 6 eine Oberflächenform derart gestaltet, dass ein für Kriechströme massgeblicher Weg grösser als der Abstand a bzw. b zwischen den Anschlussdrähten 23 und 24 bzw. 24 und 25 ist. Eine wesentliche Verminderung von Kriechströmen ist dadurch erreichbar, dass an Austrittstellen der Anschlussdrähte 23, 24, 25 je ein im wesentlichen zylinderstumpfförmiger Aufbau 80, 81 und 82 ausgeformt wird. Insbesondere in der isometrischen Darstellung der Fig. 2 ist sehr gut ersichtlich, dass beim zweiten Sensorelement 3 der für einen Kriechstrom massgebliche Weg zwischen den Anschlussdrähten 24 und 25, durch den an der Austrittsstelle des Anschlussdrahts 24 ausgebildete Aufbau 81 und den an der Austrittsstelle des Anschlussdrahts 25 ausgebildete Aufbau 82 wesentlich grösser ist, als der Abstand zwischen den beiden Anschlussdrähten 24 und 25.

Sofern Dichtungsmasse verwendet wird, sind die beiden Schalen 5 und 6 vorteilhafterweise derart auf die Durchmesser und die Form der Anschlussdrähte 23, 24 und 25 abgestimmt, dass eine leiterplattenseitig an den beiden Schalen 5 und 6 aufgetragene Dichtungsmasse sensorseitig eine für Kriechströme zwischen den Anschlussdrähten 23, 24 und 25 massgebende Formgebung des Führungsmittels nicht wirksam beeinträchtigt wird.

In den in der Zeichnung dargestellten Ausführungsbeispielen sind die beiden Schalen 5 und 6 vor dem Zusammenfügen vollständig getrennt dargestellt. In einer Variante des Sensormoduls 1 sind die beiden Schalen 5 und 6 durch ein mit Vorteil seitlich an den Schalen 5 und 6 angeordnetes Scharnier miteinander verbunden, wobei eine Drehachse des Scharniers parallel zu den Anschlussdrähten 23, 24 und 25 liegt. Beispielhaft wird das Scharnier direkt beim einstückigen Formen der beiden Schalen 5 und 6 ausgebildet.

Eine in der Fig. 6 dargestellte Messeinrichtung weist einen kapazitiven Feuchtesensor 60 und einen Temperatursensor 61 auf. Ein elektrisches Signal S1 des Feuchtesensors 60 ist zur Bildung eines Feuchtesignals H mit Vorteil auf einen mit dem Feuchtesensor 60 verbundenen ersten Signalumformer 62 geführt, während ein elektrisches Signal S2 des Temperatursensors 61 zur Bildung eines Temperatursignals T mit Vorteil auf einen mit dem Temperatursensor 61 verbundenen zweiten Signalumformer 63 geführt ist. Ausgangsseitig sind die beiden Signalumformer 62 und 63 mit einem Mikroprozessor 64 verbunden.

Ein Datenspeicher 65 weist Korrekturdaten K zur Korrektur des Feuchtesignals H auf. Ein der erfassten relativen Luftfeuchtigkeit entsprechendes Ausgangssignal Hr ist vom Mikroprozessor 64 unter Verwendung des Feuchtesignals H, des Temperatursignals T und der Korrekturdaten K berechenbar.

Bei Bedarf wird das Ausgangssignal Hr in einer Schnittstelleneinheit 66 für einen gewissen Kommunikationsstandard aufbereitet und als standardisiertes Ausgangssignal Hrs zur Verfügung gestellt.

In einer vorteilhaften Ausführung der Messeinrichtung wird eine Veränderung eines wichtigen Sensorkennwerts von einer Überwachungseinheit 67 über einen längeren Zeitraum, also über mehrere Monate oder Jahre erfasst. In der beispielhaften Ausführung nach der Fig. 6 wird eine Veränderung des ohmschen Widerstandes des Feuchtesensors 60 von der Überwachungseinheit 67 erfasst. Eine grössere Abweichung des Widerstandswertes des kapazitiven Feuchtesensors 60, kann auf einen Fehler oder auf eine fortgeschrittene Alterung des Feuchtesensors 60 hindeuten. Für eine Fehlerdiagnose wird an einem Ausgang 68 ein Zustandssignal ΔR ausgegeben, welches beispielsweise vom Mikroprozessor 64 ausgewertet oder weitergeleitet wird. Das Zustandssignal ΔR wird beispielsweise als zusätzliche Information mit dem Ausgangssignal Hr weitergeleitet oder in einer Variante der Messeinrichtung unabhängig vom Ausgangssignal Hr zur Verfügung gestellt.

Die Signalumformer 62 und 63, der Mikroprozessor 64, der Datenspeicher 65 sind mit Vorteil auf der Leiterplatte 4 (Fig. 1) angeordnet. Die Schnittstelleneinheit 66 ist je nach Bedarf auf der Leiterplatte 4 oder in einer Variante auf der der Leiterplatte 4 abgewandten Seite des Fühlerrohrs 8 in einem weiteren Gehäuse untergebracht.

## Patentansprüche

1. Sensormodul mit wenigstens einem elektrische Anschlussdrähte aufweisenden Sensorelement und einer Leiterplatte, wobei die elektrischen Anschlussdrähte des Sensorelements mit der Leiterplatte elektrisch leitend verbunden sind,
wobei ein zwischen der Leiterplatte (4) und dem Sensorelement (2; 3) angeordnetes Führungsmittel (20,21, 22, 26, 27, 28) verhanden ist durch welches die elektrischen Anschlussdrähte (23, 24, 25) in einem gewissen Abstand voneinander isoliert zur Leiterplatte (4) geführt werden,
wobei das Führungsmittel (20,21,22,26,27,28) ein erstes Teil und ein zweites Teil (26,27,28) aufweist und die Anschlussdrähte (23, 24, 25) zwischen dem ersten Teil (20,21,22) und dem zweiten Teil (26,27,28) angeordnet sind,
**dadurch gekennzeichnet, dass** das erste Teil (20,21,22) im wesentlichen keilförmige Zähne(20,21,22) aufweist, die derart ausgebildet und angeordnet sind, dass ein Anschlussdraht (23; 24; 25) zwischen zwei nebeneinander angeordneten Zähnen liegt, und
wobei das zweite Teil (26,27,28) im wesentlichen keilförmige Zähne (26,27,28) aufweist, die derart ausgebildet und angeordnet sind, dass der Anschlussdraht (23; 24; 25) zwischen zwei nebeneinander angeordneten Zähnen liegt, und
wobei die Zähne des ersten Teils (20,21,22) gegenüber den Zähnen des zweiten Teils (26,27,28) versetzt angeordnet sind.

2. Sensormodul nach Anspruch 1, **dadurch gekennzeichnet, dass** das Führungsmittel (20,21,22,26,27,28) an einer Austrittstelle eines Anschlussdrahtes eine Oberflächenform aufweist, durch welche ein für einen Kriechstrom massgeblicher Weg zwischen dem Anschlussdraht und einem weiteren Anschlussdraht grösser als der Abstand zwischen den beiden Anschlussdrähten ist.

3. Sensormodul nach einem vorangehenden Anspruch, **dadurch gekennzeichnet, dass** zwei benachbarte Zähne (20, 21) des ersten Teils eine Lücke bilden, in welcher ein Anschlussdraht (23) gefangen ist, wobei ein Sattel (32) der Lücke, auf dem der Anschlussdraht (23) aufliegt, und von dem aus je eine Zahnflanke der beiden benachbarten Zähne (20, 21) ausgeht, in einer eine leitende Schicht der Leiterplatte (4) aufweisenden Ebene liegt.

4. Sensormodul nach einem vorangehenden Anspruch, **dadurch gekennzeichnet, dass** das erste Teil (20,21,22) an einer ersten Schale (5) ausgebildet ist, und
dass das zweite Teil (26,27,28) an einer zweiten Schale (6) ausgebildet ist, wobei die Leiterplatte (4) wenigstens an einer der beiden Schalen (5; 6) befestigt ist.

5. Sensormodul nach einem vorangehenden Anspruch, **dadurch gekennzeichnet, dass** die Leiterplatte (4) in der ersten Schale (5) gelagert ist.

6. Sensormodul nach einem vorangehenden Anspruch, **dadurch gekennzeichnet, dass** die Anschlussdrähte (23, 24, 25) des Sensorelements (2; 3) an der Leiterplatte (4) angelötet sind.

7. Sensormodul nach einem vorangehenden Anspruch, **dadurch gekennzeichnet, dass** die beiden Schalen (5, 6) derart auf die Durchmesser und die Form der Anschlussdrähte (23, 24, 25) des Sensorelements (2; 3) angepasst sind, dass eine leiterplattenseitig an den beiden Schalen (5, 6) aufgetragene Dichtungsmasse sensorseitig eine für Kriechströme zwischen den Anschlussdrähten (23, 24, 25) massgebende Formgebung des Führungsmittels (20,21,22,26,27,28) nicht wesentlich beeinträchtigt.

8. Sensormodul nach einem vorangehenden Anspruch, **dadurch gekennzeichnet, dass** auf der Leiterplatte (4) eine elektronische Schaltung (62; 63) zur Umformung von elektrischen Sensorsignalen angeordnet ist.

9. Sensormodul nach einem vorangehenden Anspruch, **dadurch gekennzeichnet, dass** auf der Leiterplatte (4) eine Datenspeicher (65) mit Daten (K) zur Korrektur von elektrischen Sensorsignalen angeordnet ist.

10. Sensormodul nach einem vorangehenden Anspruch, **dadurch gekennzeichnet, dass** auf der Leiterplatte (4) ein Prozessor (64) angeordnet ist, durch den Sensorsignale transformierbar sind.

11. Sensormodul nach einem vorangehenden Anspruch, **dadurch gekennzeichnet, dass** das Sensorelement durch ein Filter (7) abdeckbar ist.

12. Sensormodul nach einem vorangehenden Anspruch, **dadurch gekennzeichnet, dass** ein die Leiterplatte (4) abdeckendes Fühlerrohr (8) angeordnet ist.

13. Sensormodul nach einem vorangehenden Anspruch, **dadurch gekennzeichnet, dass** das Sensorelement (2; 3) ein Feuchtesensor ist.

14. Sensormodul nach einem vorangehenden Anspruch, **dadurch gekennzeichnet, dass** das Sensorelement (2; 3) ein Temperatursensor ist.

## Claims

1. Sensor module with at least one sensor element having electrical connecting wires, and a printed circuit board, the electrical connecting wires of Sensor element being connected to the printed circuit board in an electrically conducting fashion,
a guiding means (20, 21, 22, 26, 27, 28) that is arranged between the printed circuit board (4) and Sensor element (2; 3) being present, through which the electrical connecting wires (23, 24, 25) are guided to the printed circuit board (4) in an insulated fashion at a certain spacing from one another,
the guiding means (20, 21, 22, 26, 27, 28) having a first part and a second part (26, 27, 28), and the connecting wires (23, 24, 25) being arranged between the first part (20, 21, 22) and the second part (26, 27, 28),
**characterized in that** the first part (20, 21, 22) has essentially wedge-shaped teeth (20, 21, 22) which are constructed and arranged in such a way that a connecting wire (23; 24; 25) lies between the two teeth arranged next to one another, and
the second part (26, 27, 28) has essentially wedge-shaped teeth (26, 27, 28) that are designed and arranged in such a way that the connecting wire (23; 24; 25) lies between two teeth arranged next to one another, and
the teeth of the first part (20, 21, 22) are arranged offset from the teeth of the second part (26, 27, 28).

2. Sensor module according to Claim 1, **characterized in that** the guiding means (20, 21, 22, 26, 27, 28) have at an exit site of a connecting wire a surface shape through which a path decisive for a leakage current between the connecting wire and a further connecting wire is larger than the spacing between the two connecting wires.

3. Sensor module according to a preceding claim, **characterized in that** two neighbouring teeth (20, 21) of the first part form a gap in which a connecting wire (23) is captured, a saddle (32) of the gap on which the connecting wire (23) rests and from which one tooth flank each of the two neighbouring teeth (20, 21) emerges, lying in a plane having a conducting layer of the printed circuit board (4).

4. Sensor module according to a preceding claim, **characterized in that** the first part (20, 21, 22) is constructed on a first shell (5), and **in that** the second part (26, 27, 28) is constructed on a second shell (6), the printed circuit board (4) being fastened at least on one of the two shells (5; 6).

5. Sensor module according to a preceding claim, **characterized in that** the printed circuit board (4) is mounted in the first shell (5).

6. Sensor module according to a preceding claim, **characterized in that** the connecting wires (23, 24, 25) of Sensor element (2; 3) are soldered on the printed circuit board (4).

7. Sensor module according to a preceding claim, **characterized in that** the two shells (5, 6) are adapted to the diameters and the shape of the connecting wires (23, 24, 25) of Sensor element (2; 3) in such a way that on Sensor side a sealing compound applied on the printed circuit board side to the two shells (5, 6) does not substantially impair a shaping of the guiding means (20, 21, 22, 26, 27, 28) which is decisive for leakage currents between the connecting wires (23, 24, 25).

8. Sensor module according to a preceding claim, **characterized in that** an electronic circuit (62; 63) for converting electric sensor signals is arranged on the printed circuit board (4).

9. Sensor module according to a preceding claim, **characterized in that** a data memory (65) with data (K) for correcting electric sensor signals is arranged on the printed circuit board (4).

10. Sensor module according to a preceding claim, **characterized in that** a processor (64) by means of which sensor signals can be transformed is arranged on the printed circuit board (4).

11. Sensor module according to a preceding claim, **characterized in that** Sensor element can be covered by a filter (7).

12. Sensor module according to a preceding claim, **characterized by** the arrangement of a sensing tube (8) covering the printed circuit board (4).

13. Sensor module according to a preceding claim, **characterized in that** Sensor element (2; 3) is a humidity sensor.

14. Sensor module according to a preceding claim, **characterized in that** Sensor element (2; 3) is a temperature sensor.

## Revendications

1. Module de capteur doté d'au moins un élément de capteur présentant des fils électriques de connexion et d'un circuit imprimé, les fils électriques de connexion de l'élément de capteur étant raccordés au circuit imprimé de manière électro-conductrice,
un moyen de guidage (20, 21, 22, 26, 27, 28), disposé entre le circuit imprimé (4) et l'élément de capteur (2, 3), étant présent, par l'intermédiaire duquel les fils électriques de connexion (23, 24, 25) sont menés vers le circuit imprimé (4) en étant isolés les uns des autres d'une certaine distance,
le moyen de guidage (20, 21, 22, 26, 27, 28) présentant une première partie et une deuxième partie (26, 27, 28) et les fils de connexion (23, 24, 25) étant disposés entre la première partie (20, 21, 22) et la deuxième partie (26, 27, 28),
**caractérisé en ce que** la première partie (20, 21, 22) présente des dents (20, 21, 22) de forme essentiellement conique, qui sont exécutées et disposées de telle manière qu'un fil de connexion (23, 24, 25) est situé entre deux dents disposées l'une à côté de l'autre, et
**en ce que** la deuxième partie (26, 27, 28) présente des dents (26, 27, 28) de forme essentiellement conique, qui sont exécutées et disposées de telle manière que le fil de connexion (23, 24, 25) est situé entre deux dents disposées l'une à côté de l'autre, et
**en ce que** les dents de la première partie (20, 21, 22) sont disposées de manière décalée par rapport aux dents de la deuxième partie (26, 27, 28).

2. Module de capteur selon la revendication 1, **caractérisé en ce que** le moyen de guidage (20, 21, 22, 26, 27, 28), à un point de sortie d'un fil de connexion, présente une forme de surface, par laquelle une trajectoire déterminante pour un courant de fuite entre le fil de connexion et un autre fil de connexion est supérieure à la distance entre les deux fils de connexion.

3. Module de capteur selon l'une quelconque des revendications précédentes, **caractérisé en ce que** deux dents adjacentes (20, 21) de la première partie forment un espace dans lequel est logé un fil de connexion (23), un col (32) de l'espace, sur lequel repose le fil de connexion (23) et duquel part respectivement un flanc de dent des deux dents (20, 21) adjacentes, étant situé dans un plan présentant une couche conductrice du circuit imprimé (4).

4. Module de capteur selon l'une quelconque des revendications précédentes, **caractérisé en ce que** la première partie (20, 21, 22) est formée sur une première coque (5), et **en ce que** la deuxième partie (26, 27, 28) est formée sur une deuxième coque (6), le circuit imprimé (4) étant fixé au moins à l'une des deux coques (5, 6).

5. Module de capteur selon l'une quelconque des revendications précédentes, **caractérisé en ce que** le circuit imprimé (4) est logé dans la première coque (5).

6. Module de capteur selon l'une quelconque des revendications précédentes, **caractérisé en ce que** les fils de connexion (23, 24, 25) de l'élément de capteur (2, 3) sont soudés au circuit imprimé (4).

7. Module de capteur selon l'une quelconque des revendications précédentes, **caractérisé en ce que** les deux coques (5, 6) sont adaptées de telle manière au diamètre et à la forme des fils de connexion (23, 24, 25) de l'élément de capteur (2, 3) qu'une masse d'étanchéité appliquée du côté du circuit imprimé sur les deux coques (5, 6) n'influence pas essentiellement, du côté du capteur, un façonnage du moyen de guidage (20, 21, 22, 26, 27, 28) déterminant pour des courants de fuite entre les fils de connexion (23, 24, 25).

8. Module de capteur selon l'une quelconque des revendications précédentes, **caractérisé en ce qu'**un montage (62, 63) électronique est placé sur le circuit imprimé (4) pour convertir des signaux électriques de capteur.

9. Module de capteur selon l'une quelconque des revendications précédentes, **caractérisé en ce qu'**une mémoire de données (65) comportant des données (K) est placée sur le circuit imprimé (4) pour corriger des signaux électriques de capteur.

10. Module de capteur selon l'une quelconque des revendications précédentes, **caractérisé en ce qu'**un processeur (64) est disposé sur le circuit imprimé (4), par l'intermédiaire duquel les signaux de capteur sont transformables.

11. Module de capteur selon l'une quelconque des revendications précédentes, **caractérisé en ce que** l'élément de capteur peut être recouvert par un filtre (7).

12. Module de capteur selon l'une quelconque des revendications précédentes, **caractérisé en ce qu'**un tube palpeur (8) recouvrant le circuit imprimé (4) est disposé.

13. Module de capteur selon l'une quelconque des revendications précédentes, **caractérisé en ce que** l'élément de capteur (2, 3) est un capteur d'humidité.

14. Module de capteur selon l'une quelconque des revendications précédentes, **caractérisé en ce que** l'élément de capteur (2, 3) est un capteur de température.
